Europäisches Patentamt

European Patent Office

Office européen des brevets

(11) Publication number: **0 082 263**
**A1**

# (12) EUROPEAN PATENT APPLICATION

(21) Application number: **82109521.3**

(22) Date of filing: **14.10.82**

(51) Int. Cl.³: **G 01 N 1/00**
**G 01 N 31/08, B 01 L 3/02**

(30) Priority: **10.12.81 US 329155**

(43) Date of publication of application:
**29.06.83 Bulletin 83/26**

(84) Designated Contracting States:
**DE FR NL SE**

(71) Applicant: **THE PERKIN-ELMER CORPORATION**
**Main Avenue**
**Norwalk Connecticut 06856(US)**

(72) Inventor: **Sharpsteen, James T.**
**1916 Bluebird**
**Glendora California 91740(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Sample introduction for chemical analysis by spectrometry/liquid chromatography.

(57) A method and means for producing repeatable samples of liquids of a predetermined, precise volume, preferably for chemical analysis in such fields as atomic absorption spectroscopy and liquid chromatography comprising a capillary tube, or sample tip (10), with a cylindrical or conical inner wall (20) of a predetermined length, terminating in an annular step (16) formed by a radially outwardly extending wall which acts as a liquid stop by terminating the capillary action of liquid into the tip (10). The radially outer edge of the step (16) connects the tip (10) to a larger tube (12) not affected by capillary action which serves as a support for the sample tip (10). The liquid sample is formed by inserting the tip (10) in the liquid to be tested allowing the tip (10) to fill by capillary action to the step (16) where the capillary action terminates. The sample is then inserted into a liquid repository, such as a furnace in an atomic spectrometer, and emptied into the repository by the introduction of compressed gas connected to the tip.

The volumetric size of the sample does not depend on a source of gas or vacuum and the amount of pressurized gas used to expel the sample is not critical.

*FIG. 1*

-1-

## SAMPLE INTRODUCTION FOR
## CHEMICAL ANALYSIS BY SPECTROMETRY/
## LIQUID CHROMATOGRAPHY

## BACKGROUND OF THE INVENTION

This invention relates, in the broadest sense, to atomic spectrometry and it is directed, in particular, to a method and means for providing accurate samples of liquids for chemical analysis in such fields as atomic absorption spectroscopy and liquid chromatography.

The purpose of this invention is to provide a simple, rugged, reliable apparatus and a simple method for providing selected accurate samples of liquids, repeatedly, especially for use in the atomic absorption spectroscopy and liquid chromatography fields.

Conventionally, liquid samples are made by utilizing a small tube (pipette) which is either cylindrical or is tapered outwardly from the liquid inlet for the introduction of liquid into the tubing. The liquid conventionally clings to the inner wall of the pipette by capillary action and a source of vacuum determines the amount of liquid to be withdrawn from the liquid as a sample. The source of vacuum can be generated directly by the movement of a piston connected to the tubing, similar in action to the action of a hypodermic needle, or by connecting the pipette to a vacuum source. In the one case, a scale is visually read by an operator to determine the amount of liquid within the pipette and, in the case of the remote vacuum source, a valving system is used to connect and disconnect the tubing to and from the source for a predetermined period. After the sample is formed, the liquid in the tubing is then transported, either by hand or by machine, to the appropriate analysis equipment such as the graphite tubing furnace in the case of a spectrometer.

One of the problems involved in the prior art is that, whether the sample is produced manually or by machine, as described supra, a volumetric error can occur from one sample to the next affecting the accuracy of the analysis. Another problem is that, in one case, the visual reading of the scale, however accurate, can vary and, in the other case, either the amount of vacuum in the source or the timing mechanisms for opening and closing the valving can vary, producing an error in liquid volume. Also, in the case of liquids of high viscosity, the pipettes tend to accumulate drops which are sometimes larger than the desired sample size, introducing an error and are difficult to remove by the pressurized gas when the sample is introduced into the spectrometer. More specifically in the case of oil of high viscosity, present pipettes are quite useless and in order to produce a sample the oil must be diluted with a solvent, such as kerosene, before a sample can be produced.

It is apparent, therefore, that there is a need for an apparatus and a concomitant method for producing liquid samples which are repeatable in a simple and inexpensive manner.

As will also be apparent to those skilled in the art after reading the following description of the invention and after a study of the drawings, that there is provided a simple, rugged, reliable apparatus, and a method, for producing samples for analysis in the appropriate instrument and which does not require solvents for cleaning between the samples, requires little maintenance and is able to handle liquids, such as lubricating oils, for all anticipated viscosities, without dilution.

It will also be apparent that the method of producing the samples is easy to perform.

SUMMARY OF THE INVENTION

The invention which is an improvement over the foregoing prior art comprises a capillary tube, or sample tip, with a cylindrical or conical inner wall of a predetermined length, terminating in an annular step which acts as a liquid stop by terminating the capillary action of liquid introduced into the tip thus precisely determining the volume of the sample of liquid. The radially outer edge of the step connects the tip to a radially larger tube which serves as a support for the sample tip and may serve to connect the tip to a source of compressed gas for expelling the sample. The liquid sample is formed by inserting the tip in the liquid to be tested, allowing the tip to fill by capillary action to the step where the capillary action terminates, and then inserting the tip into a liquid repository such as a furnace in an atomic spectrometer and emptying the tip into the repository by compressed gas connected to the tip.

Two embodiments of the invention are shown and as will be apparent further to those skilled in the art, the precise length of the capillary tip which terminates at a specific point (step) beyond which the capillary action will not operate, provides a unique way of producing repeatable samples of liquids of a predetermined, precise amount. Repeatable samples are not possible without this step because surface tension, which is responsible for capillary action, changes considerably due to chemical variations in the sample, which would then vary the height of the sample column. The invention does not depend on the chemical or physical properties of the sample, or the source of gas or vacuum, to determine the volumetric size of the sample. That is to say there is no longer a need for aspiration and the amount of pressurized gas used to empty the tip is not critical. Further, the invention may be used with existing commercial spectrometers and liquid chroma-
tographers and reduces operator interaction measurably.

As will be clear also to those skilled in the
art, not only does this invention produce accurate
repeatable samples but it produces such samples of liquids
such as high viscosity and which heretofore was impossible.
Further, this invention may be used with automatic sampling
system such as disclosed in the U.S. Patent No. 4,166,094
to Froehlich, et al., dated August 28, 1979.

## BRIEF DESCRIPTION OF THE DRAWINGS

Figure 1 illustrates a sample tip formed integral with the outer supporting tube,

Figure 1A is an enlarged, more detailed view of a portion of Figure 1,

Figure 2 illustrates a sample tip formed from an existing commercially available pipette,

Figure 2A is an enlarged, more detailed view of a portion of Figure 2, .

Figures 3A and 3B illustrate the manner in which the apparatus is used for extracting and expelling a liquid sample,

Figure 4 illustrates the sample tip as it could be applied to a spectrometer,

Figure 5 illustrates a manual means for inserting the sample tip into a liquid and expelling the gas into the graphite furnace tube, and

Figure 6 is a graph of entrance tip inside diameter versus sample height for various sample volumes of specific liquids.

DETAILED DESCRIPTION

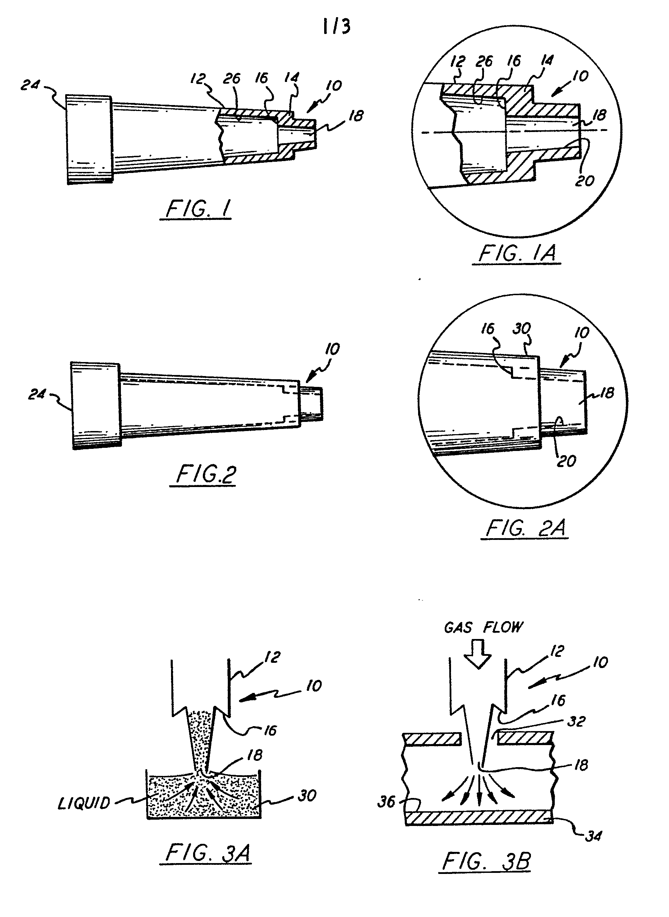

Figure 1 illustrates the preferred embodiment of this invention.  In this Figure, the sampling tip 10 is shown formed integral with a supporting tube 12 and connected thereto by a radially outwardly extending portion 14 forming a step or ledge (top wall) 16 which forms a stop means for terminating the capillary action of liquid introduced into the inlet end 18 of the sampling tip.  The sampling tip, supporting tube and connecting portion 14 are formed of a suitable plastic, such as polypropelene.

This sampling tip defines the liquid sample size and has an inner conical wall 20 which extends from the inlet to the ledge 16, thus defining the volume of liquid introduced into the inlet 18.  The conical taper of the inner wall is constructed according to conventional standards, or about a 5.7$^{\circ}$ taper from inlet to outlet.  Thus, typically, the inlet is 0.045 inches in diameter and the outlet is 0.59 inches in diameter for a 5 microliter sample size with a ledge 16 of 0.025 inches as a minimum dimension. The supporting tube 12 is formed with a conical taper similar to the conical taper of the sampling tip and terminates in an enlarged end with an opening 24 suitably internally tapered to receive the tapered end of a suitable tubing (not shown in this Figure) for connecting the tip to a pressurized gas source.  The two pieces, tip and tubing, are held together by friction.  The length of the supporting wall is not significant to the operation of the sampling tip since its purpose is only to support the sampling tip, however, its inner conical wall 26 must be spaced from

0082263

the conical wall 20 sufficiently to terminate the capillary action of liquids as they are drawn into the sample tip. The selection of the inner diameter of the sampling tip and the inner diameter of the supporting tube are within the state of the art of capillary tubes and the radial dimension of the ledge is selected to terminate the capillary action.

An alternative embodiment of the invention is shown in Figure 2 where the sample tip 10 is constructed from a commercially available pipette tip, such as the Eppendorf pipette tips (Catalogue No. 22 35 130-3) available from Brinkman Instruments Inc. of Westbury, NY 11590. The standard pipette tip is formed of polypropelene and includes the large open end 24 as in Figure 1 to receive the tapered end of other tubing for connection, in this case, to a vacuum source and/or a source of pressurized gas. The vacuum source in the commercial pipette system is formed by a piston operatively connected to the pipette tip and the stroke of the piston determines the size of the sample. The conical main body 12 is similar to the supporting tube 12 of the embodiment of Figure 1 and tapers towards a narrow inlet (not shown). However, in this embodiment, the commercial pipette tip is modified by shortening the main body 12 to any selected length to form an opening 30 which corresponds to the lower end of the supporting tube of Figure 1 large enough to receive a sample tip 10 therein. Sample tip 10 is formed from the severed portion of the main body 12 of the commercial pipette tip and fixed partially within the main body 12 (as shown in Figure 2) by a suitable glue for plastics, or normal friction can be relied upon to hold the two pieces together. Again, as in the case of the first embodiment, this sample tip defines the sample size and the upper edge of the tip is the ledge 16 which forms the stop means for terminating the capillary action of the liquid. Again, as in the case of the preferred embodiment, the supporting (main body) serves only to support the sample tip.

In the foregoing embodiment, the inner walls define the sample volume size in the order of 5 to 10 microliters; a size heretofore incapable of repeatedly being duplicated, especially in the case of oil which, because of its viscosity and surface tension accumulated drops sometimes larger than the sample size itself.

Figures 3A and 3B illustrate the sampling tip as typically used in the field of atomic absorption spectroscopy. The use of this invention in the field of liquid chromatography will not be described for the sake of brevity. The sampling tip is introduced below the surface of a liquid specimen 30, in this case, oil, and is filled by capillary action alone to the annular step 16. In this case, gas or air in the supporting tube and tip is at ambient pressure allowing the capillary action to operate. Figure 3b illustrates the means of expelling the sample which comprises the introduction of a pulse of an inert gas (Argon) under pressure in the order of 10 psi for two or three seconds' duration after the tip has been inserted into a sample introduction hole 32 in a graphite tube 34 forming a part of the furnace of a spectrometer. The pulse of pressurized gas not only expels the sample from the tip but sprays the sample against the inner wall 36 and concurrently cleans the supporting tube and tip for the next sample. It is to be noted that in Figures 3A and 3B the step 16 is shown at an angle to the supporting tube 12 and to the outer wall of

0082263

the sample tip, but this is simply one form of the sample tubing. This step can be formed in a radially outwardly horizontal direction normal to the center of the tube such as shown in Figure 1.

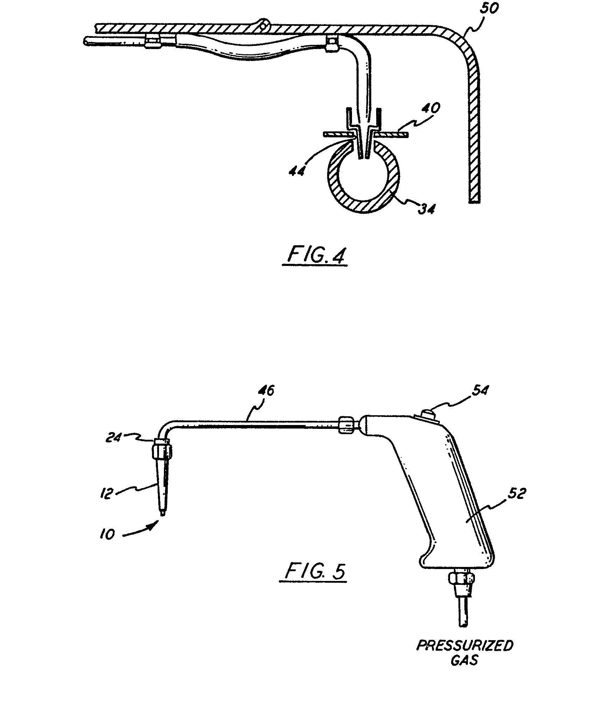

In Figure 4, the sample tip 10 and supporting tube 12 are shown supported in a holder 40. This holder 40 is a flat plate with aperture 44 located above the graphite tube 34 and simply holds the sample tip in its operative position. Obviously, the size of the aperture is such that the sides of the enlarged end of the supporting tube rests against the sides of the aperture. The tubing 46 is connected to a source of injection gas and, for illustration purposes, the tube 46 is shown attached to a support 50, in this case, the hinged furnace door of a spectrometer. Thus, after the sample of consistent volume of the specimen to be analyzed is filled in accordance with the methods described and shown in Figures 3A and 3B, the tip is then transferred to the spectrometer and placed in the holder 40 directly above the opening 32 over the graphite tube 34. The tip protrudes into the tube 34 through the sample introduction hole 32. Closure of the furnace door brings the injection gas nozzle directly over the sample and, either by the closure of the door or the push of a button, the pulse of injection gas is introduced which drives the sample into the graphite tube 34 spreading it against the opposite wall 36. The furnace door is then reopened and the sample capsule removed so that the instrument is made ready to perform its analysis. Suitable solenoid and timing circuitry (not shown) are provided to meter the amount of Argon gas to expel the sample.

-10-

0082263

Figure 5 shows a gun-type hand-held device 52 with a sample tip 10 attached to a tube 46 which corresponds to the injection gas tube 46 of Figure 4. In this case, the sample tip is filled as described above by liquid to be analyzed and the tip is then manually inserted in the sample introduction hole 32 above the graphite tubing 34 and by pushing a valve actuating button 54 a controlled amount of Argon gas is directed to the tip to eject the liquid into the graphite tubing as before. In this case as before, the element of using capillary action to provide accurate sample size remains the same. The solenoid and timing circuitry may be placed within the handle to meter the amount of Argon gas used to expel the sample in the same way as the Argon gas flow is controlled in the embodiment of Figure 4.

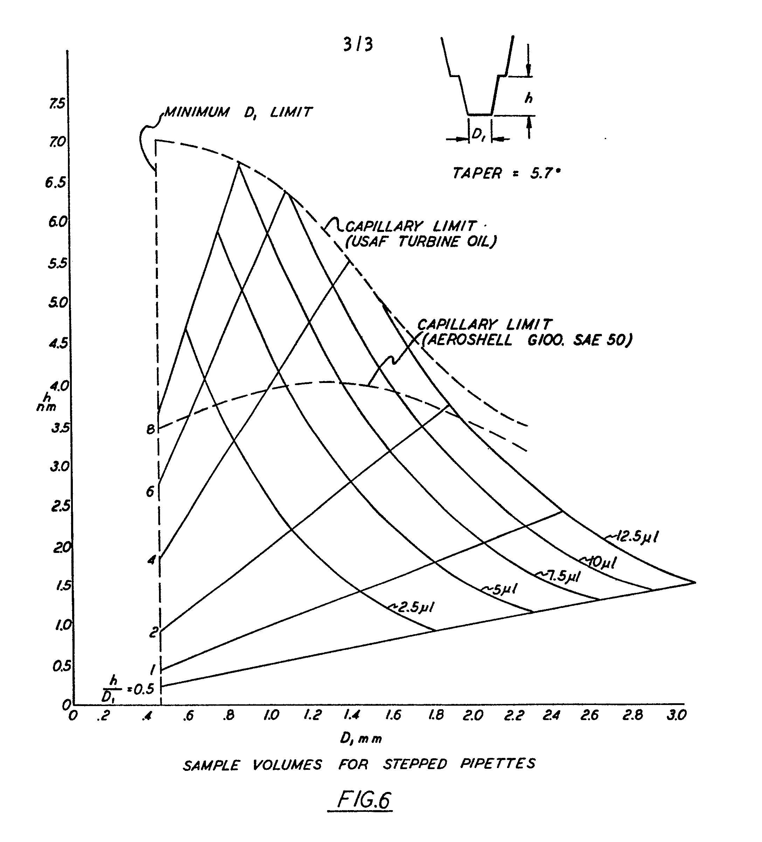

Figure 6 plots combinations of tip entrance diameters and tip heights (lengths) which provide the volume sizes of sample shown. Also shown are curves representing the maximum heights achieved experimentally by capillary action for two different lubricating oils; these curves indicating the practical volumetric limits for tips of the disclosed configurations. This also shows that repeatable results of 5 to 10 microliter samples are possible, because these volumes are well within the established limits just mentioned.

While the foregoing was directed to tapered inside walls in the sampling tips, cylindrical inside walls will also have advantages in many applications so long as the concept of the ledge or step to terminate capillary action is incorporated in the sampling tip.

-11-

0082263

Finally, it is pointed out that utilizing this invention with oil containing 62 ppm of Fe, eleven samples showed only 1.5% relative standard deviation upon analysis; such deviation being within instrument error range. Thus, it should be apparent that this invention moved the state of art from one where oil could not be handled at all to a level of highly accurate sample producer for chemical analysis.

What is claimed is:

1.    An apparatus for producing repeatable samples of liquids of a precise volume particularly for chemical analysis comprising,

a hollow supporting tube having means for connecting said tube to a supply of compressed gas,

a hollow sample tip having an inlet and an inner wall defining the precise liquid volume of the sample,

said hollow tip being capable of capillary interaction with liquid when said inlet is introduced into a liquid to be analyzed, and

means for connecting the sample tip to the supporting tube and including means for terminating capillary action of the liquid entering said sample tip.

2.    The apparatus as claimed in Claim 1 wherein said hollow supporting tube has conical inner wall.

3.    The apparatus as claimed in Claim 1 wherein the inner wall of said sample tip is conical with the smallest opening defining said inlet and the largest opening being defined by the means for connecting said sample tip to said supporting tube.

4.    The apparatus as claimed in Claim 1 wherein said sample tip and said supporting tip are integral.

5.    The apparatus as claimed in Claim 1 wherein said sample tip and said supporting tube are formed of two pieces suitably telescoped and adhered together so that a portion of said sample tip is within said supporting tube.

6. The apparatus as claimed in Claim 1 further including a graphite tubing, an introduction port in said graphite tubing for receiving said sample tip and to enable the expulsion of said liquid in said tip in response to a pulse from said compressed gas.

7. A method of producing repeatable samples of liquids of a predetermined, precise volume for chemical analysis comprising,

forming a sample tip with an inner wall defining the volume of a liquid to be analyzed,

inserting said tip into the liquid to be analyzed and allowing capillary action to fill said tip,

providing a stop means connected to said tip for terminating the capillary action of said liquid when said volume is reached, and

inserting said sample into a vaporizing means by the introduction of gas into said sample tip.

8. The method as claimed in Claim 7 wherein the step of forming said inner wall includes forming said inner wall conically.

9. The method as claimed in Claim 7 wherein liquid is oil.

10. The method as claimed in Claim 7 wherein the step of providing a stop means comprises forming a ledge coextensive with the top of said tip to space said tip from a supporting means such that capillary action terminates at the end of said inner wall.

1/3

*FIG. 1*

*FIG. 1A*

*FIG.2*

*FIG. 2A*

*FIG. 3A*

GAS FLOW

*FIG. 3B*

2/3

_FIG.4_

_FIG. 5_

PRESSURIZED
GAS

SAMPLE VOLUMES FOR STEPPED PIPETTES

FIG.6

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 01 N 1/00 |
| X | US-A-3 200 650 (V. MORRILL) * Claim 1; figures 2, 4; column 1, lines 61-70; column 2, lines 36-44 * | 1,4,7 | G 01 N 31/08 B 01 L 3/02 |
| | --- | | |
| A | DE-A-1 598 124 (BECTON, DICKINSON AND CO.) * Claims 1, 2 ; figure 9 * | 2,3 | |
| | --- | | |
| A | DE-A-2 364 099 (ABBOTT LABORATORIES) | | |
| | --- | | |
| A | DE-A-2 633 530 (INSTITUT PASTEUR) | | |
| | --- | | **TECHNICAL FIELDS SEARCHED (Int. Cl. ³)** |
| A | DE-A-2 001 710 (BECKMAN, INSTRUMENTS INC.) | | |
| | --- | | B 01 L 3/02 |
| A,D | US-A-4 166 094 (J.A. FROEHLICH et al.) | | G 01 N 1/00 G 01 N 31/08 |
| | ----- | | |

The present search report has been drawn up for all claims

| Place of search | Date of completion of the search | Examiner |
|---|---|---|
| BERLIN | 25-02-1983 | SCHWARTZ K |